# EUROPEAN PATENT SPECIFICATION

(11) **EP 2 963 157 B1**
(45) Date of publication and mention of the grant of the patent: **28.11.2018**
(21) Application number: 14757038.6
(22) Date of filing: 26.02.2014
(51) Int. Cl.: C25D 5/26, C21D 9/46, C22C 38/00, C22C 38/02, C22C 38/06, C23G 1/08, C25D 5/48

(54) **PROCESS FOR PRODUCING HIGH-STRENGTH COLD-ROLLED STEEL SHEET**
VERFAHREN ZUR HERSTELLUNG HOCHFESTER, KALTGEWALZTER STAHLBLECHE
PROCÉDÉ PERMETTANT DE PRODUIRE UNE TÔLE D'ACIER LAMINÉE À FROID À HAUTE RÉSISTANCE

(30) Priority: 28.02.2013 JP 2013038141
(43) Date of publication of application: 06.01.2016
(73) Proprietor: JFE Steel Corporation, Tokyo, 100-0011 (JP)
(72) Inventor: TAIRA, Shoichiro, Tokyo 100-0011 (JP); TANIMOTO, Wataru, Tokyo 100-0011 (JP)
(74) Representative: Haseltine Lake LLP
(86) International application number: PCT/JP2014/001020
(87) International publication number: WO 2014/132637

(56) References cited:
- JP-A- H07 331 483
- JP-A- H08 104 995
- JP-A- 2004 323 969
- JP-A- 2006 299 351
- JP-A- 2007 009 269
- JP-A- 2007 009 269
- JP-A- 2012 167 362
- JP-A- 2012 167 362
- JP-A- 2013 127 093

## Description

### Technical Field

The present invention relates to a process for manufacturing high-strength cold rolled steel sheets having excellent conversion treatment properties and post-painting corrosion resistance.

### Background Art

Reducing the weight of car bodies in order to save CO₂ emissions from vehicles has recently become a challenge for automobile manufacturers in the fight against global warming. The most effective approach to cutting down the weight of car bodies is to reduce the thickness of steel sheets that are used. When a steel sheet is simply reduced in thickness while its strength remains unchanged, the stiffness of the steel sheet is decreased and the steel sheet becomes incapable of ensuring the safety of occupants in the event of accidents such as collisions. Thus, there has been an increasing trend in which car bodies are made using high-strength cold rolled steel sheets which have a reduced thickness and have been strengthened so as to make up for the loss in stiffness by thinning of the steel sheets. Most recently, high-strength cold rolled steel sheets with a tensile strength of 1180 MPa have been increasingly used for car bodies.

Some effective methods for increasing the strength of steel sheets are to produce solid solution strengthening or to reduce the size of crystal grains by the addition of alloying elements such as silicon and manganese, to produce precipitation strengthening by the addition of precipitate-forming elements such as niobium, titanium and vanadium, and to effect strengthening by the formation of a hard transformation structure such as a martensite phase.

In general, strengthening by the addition of alloying elements results in a decrease in ductility to make it difficult for a steel sheet to be pressed into a shape of a desired part.

Silicon has a smaller effect on ductility deterioration as compared to other elements and is therefore effective for the purpose of increasing strength while ensuring ductility. Thus, the addition of silicon is substantially essential in order to produce steel sheets having both good workability and high strength.

However, the equilibrium oxygen partial pressure with oxide of silicon is so low that silicon is readily oxidized even in a reducing atmosphere in a continuous annealing furnace used in the general manufacturing of cold rolled steel sheets. Because of this fact, the passage of a Si-containing steel sheet through a continuous annealing furnace causes silicon on the surface of the steel sheet to be selectively oxidized and SiO₂ is formed. When such a steel sheet on the surface of which SiO₂ is formed is subjected to conversion treatment before painting, the SiO₂ inhibits the reaction between the conversion treatment liquid and the steel sheet. As a result, the conversion treatment fails to form conversion crystals under the portions where SiO₂ is present, resulting in the occurrence of non-covered areas on the surface of the steel sheet. A steel sheet having areas that have not been covered by conversion crystals often starts to rust as early as at the stage of washing with water just after the conversion treatment. Even if rust does not form, a conversion treated steel sheet with non-covered areas exhibits very poor corrosion resistance after painting. Thus, it is very difficult for Si-containing high-strength cold rolled steel sheets to be used for the manufacture of bodies.

A large number of methods have been proposed in order to improve the conversion treatment properties of such Si-containing high-strength cold rolled steel sheets. For example, Patent Literature 1 proposes a cold rolled steel sheet in which oxides having an atomic ratio [Si/Mn] of not more than 1 are formed on the surface, and a process for the manufacturing of such steel sheets which parameterizes the [Si/Mn] ratio in the steel sheet, the annealing temperature and the ratio of the hydrogen partial pressure to the water partial pressure in the atmosphere. However, this process requires that the annealing temperature be lowered as the Si content in the steel sheet is increased. In the case where annealing should be performed at a high temperature in order to achieve desired strength and ductility, the purpose may be accomplished by increasing the water content in the atmosphere. This approach, however, results in the formation of Fe-based oxide on the surface of the steel sheet, thus making the steel sheet unacceptable as a product. That is, the technique described in Patent Literature 1 cannot be applied to current mainstream high-strength cold rolled steel sheets containing about 1.0% silicon.

Patent Literature 2 proposes a high-strength cold rolled steel sheet which contains 0.05 to 2% silicon and satisfies [Si]/[Mn] ≤ 0.4 and which is specified in terms of the size and the number per unit area of Si-Mn complex oxides on the surface of the steel sheet as well as in terms of the surface coverage ratio of Si-based oxides on the surface of the steel sheet. Here, [Si] and [Mn] indicate the contents of the respective elements. Patent Literature 3 proposes a high-strength cold rolled steel sheet which contains 0.1 to 1% silicon and satisfies [Si]/[Mn] ≤ 0.4 and which is specified in terms of the [Mn/Si] ratio, the size and the number per unit area of Mn-Si complex oxides on the surface of the steel sheet as well as in terms of the surface coverage ratio of Si-based oxides on the surface of the steel sheet. Further, Patent Literature 4 proposes a high-strength cold rolled steel sheet which contains 0.1 to 2% silicon and satisfies [Si]/[Mn] ≤ 0.4 and which is specified in terms of the [Mn/Si] ratio, the size and the number per unit area of Mn-Si complex oxides on the surface of the steel sheet as well as in terms of the surface coverage ratio of Si-based oxides on the surface of the steel sheet. These techniques are applicable to steel sheets containing up to 2% silicon and, as an example of manufacturing the steel sheets discussed above, it is disclosed that the steel sheets are manufactured while regulating the conditions for pickling after hot rolling or while controlling the dew point during continuous annealing to -40°C or below. These methods are based on the premise that the steel sheets satisfy the [Si]/[Mn] requirement. That is, the methods have a drawback in that the degree of freedom in the chemical composition of the steel sheet is limited. Controlling the dew point during continuous annealing to not more than -40°C is very difficult in consideration of variations in dew point in actual production lines. Thus, the techniques described in Patent Literatures 2 to 4 are not suited for mass production.

Patent Literature 5 proposes a cold rolled steel sheet which contains not less than 0.4% silicon and satisfies [Si]/[Mn] ≥ 0.4 and which is specified in terms of the surface coverage ratio of Si-based oxides on the surface of the steel sheet, and a manufacturing process in which such a steel sheet is annealed and thereafter pickled. Patent Literature 6 proposes a technique in which a steel sheet containing not less than 0.5 mass% silicon is annealed and thereafter the surface of the steel sheet is ground by at least 2.0 g/m². Further, Patent Literature 7 proposes a technique in which a steel sheet containing 0.5 to 2.0% silicon is annealed, thereafter treated in an acidic solution at a pH of 0 to 4 and a temperature of 10 to 100°C for 5 to 150 seconds, and further treated in an alkaline solution at a pH of 10 to 14 and a temperature of 10 to 100°C for 2 to 50 seconds. These techniques are concerned with the removal of oxide layers formed on the surface after annealing. For example, the technique of Patent Literature 5 entails the use of an acid with a high concentration in order to remove Si-based oxides. In this case, such a high-concentration acid promotes the formation of a passivation film on the base iron and thus the technique described in this literature does not necessarily enhance conversion treatment properties. In Patent Literatures 6 and 7, further, it is necessary that a grinding section, or sections for the acidic solution treatment and the alkaline solution treatment be provided in the production lines. Thus, the techniques described in Patent Literatures 6 and 7 are not viable due to the need for a long and large facility and also due to the increase in cost.

Patent Literature 8 proposes a technique in which the surface of a steel sheet is coated with a zinc plating layer which has a coating mass of 10 to 2000 mg/m² and has a specific crystal orientation, thereby satisfying both galling resistance and conversion treatment properties. This technique is mainly aimed at improving galling resistance. With regard to conversion treatment properties, it is indicated that even with such a small zinc-coating mass, conversion treatment reaction is activated as a result of the formation of microcells between the zinc-coated portions and the exposed portions of the steel sheet. In the case of a steel sheet having a high Si concentration, however, a major proportion of the surface of the steel sheet will have been covered with SiO₂. If such oxidized portions are on exposed portions of the steel sheet, microcells will not necessarily be formd.

JP2012167362 disclosed a process for manufacturing high-strength cold rolled steel sheets containing silicon, the process comprising: annealing the steel sheets in a non-oxidizing atmosphere, pickling, and electroplating the surface of the pickled steel sheet with zinc.

### Citation List

### Patent Literature

PTL 1: Japanese Unexamined Patent Application Publication No. 4-276060
PTL 2: Japanese Patent No. 3934604
PTL 3: Japanese Unexamined Patent Application Publication No. 2005-290440
PTL 4: Japanese Patent No. 3889768
PTL 5: Japanese Unexamined Patent Application Publication No. 2004-323969
PTL 6: Japanese Unexamined Patent Application Publication No. 2003-226920
PTL 7: Japanese Unexamined Patent Application Publication No. 2007-009269
PTL 8: Japanese Unexamined Patent Application Publication No. 2006-299351

### Summary of Invention

### Technical Problem

As discussed hereinabove, no sufficient techniques exist which can prevent a decrease in the conversion treatment properties of cold rolled steel sheets to which silicon has been added for the purpose of increasing strength while maintaining ductility. This circumstance has hindered the application of high-strength cold rolled steel sheets to automobile bodies.

An object of the present invention is to solve the aforementioned problems associated with high-strength cold rolled steel sheets containing silicon as a strengthening element, specifically, to provide a process for manufacturing cold rolled steel sheets exhibiting excellent conversion treatment properties and post-painting corrosion resistance.

### Solution to Problem

The present inventors have noted that SiO₂ formed on the surface of a steel sheet inhibits the dissolution of iron in that portion and consequently makes it difficult for conversion crystals to be formed there. The present inventors have then assumed that conversion crystals will be formed if the dissolution reaction is somehow allowed to take place. The present inventors have focused attention on zinc phosphate layers that are general conversion layers (layers composed of conversion crystals). The present inventors have conducted various studies based on the assumption that the prior application of such thin zinc as serving only to help the formation of a conversion layer on the surface of a cold rolled steel sheet will make it possible to form a zinc phosphate layer after conversion treatment.

As a result, the studies have revealed that SiO₂ formed on the surface of a steel sheet locally has a form of films extending over relatively large areas, and zinc cannot be precipitated on such SiO₂ films and thereby fails to provide an effect of helping the formation of a conversion layer. It has been further found that formation of a conversion layer on a steel sheet having such SiO₂ on its surface cannot be promoted simply by changing the Zn-coating mass.

The present inventors have carried out further studies and have found that a dense and uniform conversion layer may be formed on any type of a high-Si cold rolled steel sheet by performing pickling with respect to an annealed steel sheet so as to remove an amount of 0.5 g/m² or more and thereafter electrogalvanizing the pickled steel sheet. Specifically, the present invention provides the following.
(1) A process for manufacturing high-strength cold rolled steel sheets, the high-strength cold rolled steel sheets containing 0.5 to 2.0 mass% silicon, the process including an annealing and pickling step of thermally annealing a steel sheet in a non-oxidizing atmosphere and thereafter pickling the steel sheet to dissolve away 0.5 g/m² to less than 2.0 g/m² of the steel sheet, and an electroplating step of electroplating the surface of the pickled steel sheet with zinc under such conditions that a coating mass of 100 to 5000 mg/m² is obtained.
(2) The process for manufacturing high-strength cold rolled steel sheets described in (1), wherein the non-oxidizing atmosphere is obtained by introduction of a mixture gas containing nitrogen and hydrogen, the hydrogen content in the non-oxidizing atmosphere is not more than 10 vol%, and the temperature of heating during the thermal annealing is not more than 900°C.
(3) The process for manufacturing high-strength cold rolled steel sheets described in any one of (1) and (2), wherein the process further includes an aqueous solution contact step of bringing the steel sheet after the electroplating step into contact with a P-containing aqueous solution having a concentration of not less than 0.001 g/L at a temperature of the P-containing aqueous solution of not less than 30°C.

### Advantageous Effects of Invention

According to the present invention, the strength of steel may be increased without causing a decrease in ductility. Thus, the workability of high-strength cold rolled steel sheets may be improved. Further, the invention makes it possible to form a dense and uniform conversion layer by conversion treatment of steel as the base of painting. Consequently, high-strength cold rolled steel sheets satisfying high strength and workability and also exhibiting excellent conversion treatment properties may be obtained. Further, the high-strength cold rolled steel sheets that have been subjected to conversion treatment exhibit excellent corrosion resistance after the high-strength cold rolled steel sheets are painted. Description of Embodiments

The present invention will be described in detail hereinbelow. The scope of the invention is not limited to the embodiments described below.

An aspect of the invention resides in a process for manufacturing high-strength cold rolled steel sheets containing 0.5 to 2.0 mass% silicon. The process includes an annealing and pickling step and an electroplating step.

The annealing and pickling step is a step in which a steel sheet is thermally annealed in a non-oxidizing atmosphere and thereafter 0.5 g/m² to 2.0 g/m² of the surface of the steel sheet is dissolved away by pickling. The electroplating step is a step in which the surface of the pickled steel sheet is electroplated with zinc under such conditions that a coating mass of 100 to 5000 mg/m² is obtained.

First, the steel sheet to be thermally annealed will be described. In the specification, the unit "%" used for the chemical composition and concentrations indicates "mass%" unless otherwise mentioned.

The steel sheet in the invention contains 0.5 to 2.0% silicon. The addition of silicon makes it possible to strengthen steel by solid solution strengthening with a relatively small decrease in formability. Sufficiently high strength may be obtained by adding silicon to a Si content of 0.5% or more. Controlling the Si content to be 2.0% or less ensures a small decrease in ductility, and the decrease in production efficiency during cold rolling may be prevented.

In the invention, elements other than silicon are not particularly limited. It is, however, preferable that the steel sheets used in the invention contain the following elements in the following amounts.

The steel sheet used in the invention preferably contains 0.05 to 0.25% carbon because carbon is an element which contributes to the formation of such phases as retained austenite, bainite and martensite that are necessary for the strengthening of steel microstructures. When the need arises to add carbon appropriately in order to obtain desired microstructures, it is preferable to add carbon so that the C content becomes 0.05% or more. If the C content exceeds 0.25%, a decrease in weldability is sometimes caused. It is therefore preferable that the C content be controlled to not more than 0.25%. The C content is more preferably 0.05 to 0.10%.

The steel sheet used in the invention preferably contains 0.5 to 3.0% manganese. Manganese can strengthen steel by solid solution strengthening and also enhances the hardenability of steel to promote the formation of retained austenite, bainite and martensite. When the need arises to add manganese appropriately in order to obtain desired microstructures, it is preferable to add manganese so that the Mn content becomes 0.5% or more. The effects are saturated after the Mn content exceeds 3.0% and any further addition only increases the cost. It is therefore preferable that the Mn content be controlled to not more than 3.0%. The Mn content is more preferably 1.6 to 2.6%.

The steel sheet used in the invention preferably contains 0.005 to 0.05% phosphorus. Phosphorus is a solid solution strengthening element and is usually effective for obtaining high-strength cold rolled steel sheets. The P content is preferably controlled to 0.005% or more. Any P content exceeding 0.05% sometimes leads to a decrease in spot weldability. The P content is more preferably 0.02 to 0.03%.

The steel sheet used in the invention may contain 0.005% or less sulfur. Sulfur is precipitated as MnS in steel and this precipitate causes a decrease in the stretch flangeability of steel sheets. The S content is more preferably not more than 0.0020%.

The steel sheet used in the invention preferably contains 0.005 to 0.06% aluminum. Aluminum is an element added as a deoxidizer during steelmaking and is effective for separating nonmetallic inclusions that would cause a decrease in stretch flangeability in the form of slag. In order to obtain this effect, it is preferable to add aluminum so that the Al content becomes 0.005% or more. Adding more than 0.06% aluminum results in an increase in cost. The Al content is more preferably 0.007 to 0.040%.

The balance after the deduction of the aforementioned components is preferably iron and inevitable impurities. Examples of the inevitable impurities include oxygen and nitrogen. Oxygen and nitrogen are typical examples of the inevitable impurities that are mixed inevitably during the refining of steel. In particular, nitrogen decreases the formability of steel sheets and is therefore desirably removed to the smallest content that is possible during the steelmaking step. However, the removal of nitrogen to a greater extent than is necessary increases the refining cost. It is therefore preferable that the N content be reduced to a substantially unharmful level, specifically, to 0.01% or less. The N content is more preferably 0.0040% or less.

The steel sheets described above may be produced by any methods without limitation. For example, the steel sheets may be produced from molten steel having the aforementioned chemical composition. More specifically, first, molten steel adjusted to the aforementioned chemical composition is formed into a slab by continuous casting or ingot making. Next, the slab is hot rolled directly or after cooling and reheating. Next, the resultant hot rolled sheet is cooled, coiled, pickled and cold rolled into a steel sheet having a desired thickness. The process from the hot rolling to the cold rolling may be performed by usual methods under any conditions without limitation.

In the annealing and pickling step, the above steel sheet is thermally annealed in a non-oxidizing atmosphere and thereafter the surface of the steel sheet is dissolved away by 0.5 g/m² or more by pickling. The annealing and pickling step will be described below.

Here, the non-oxidizing atmosphere refers to an atmosphere in which iron that is the main component of the steel sheet does not substantially form oxides. Because the usual annealing step uses an inert gas such as nitrogen, the atmosphere requires no control of the oxygen concentration itself. However, the use of a gas having a high dew point renders the atmosphere oxidative to iron. Thus, the dew point is to be not more than 0°C. On the other hand, the lower limit of the dew point is not particularly limited. In the invention, the lower limit is preferably -50°C because the control of the water content comes to require a special facility when the dew point is below -50°C.

In addition to being non-oxidative to iron, the non-oxidizing atmosphere in the invention is capable of chemically reducing a thin surface oxidized layer (based on iron) that has been formed during the steps until the cold rolling. Therefore, the non-oxidizing atmosphere is preferably nitrogen gas containing hydrogen. The required proportion of hydrogen is preferably in the range of 0.1 to 10 vol%. If the hydrogen proportion is less than 0.1 vol%, the thin surface oxidized layer may not be chemically reduced sufficiently. The effects on the chemical reduction of the surface oxidized layer are saturated after the proportion exceeds 10 vol%. When the hydrogen concentration is 0.01 vol% or less, the oxidized layer on the surface tends to persist and makes Zn-plating difficult unless pickling is effected to a sufficient extent. In such cases, it is necessary that the pickling loss be increased as compared to that under other conditions.

The dew point of the atmosphere gas is not particularly limited and may be set in a general range, specifically, in the range of -50 to 0°C. The dew point of the atmosphere gas may be controlled appropriately while ensuring that the oxidation of iron is suppressed.

Heating in the thermal annealing may be performed by any method and under any conditions without limitation. The heating temperature is preferably 900°C or below. In order to heat sufficiently the steel sheet by annealing, the heating temperature is preferably 700°C or above. The heating temperature is more preferably 800 to 850°C.

The heating time during the thermal annealing (the total of the temperature-raising time and the holding time after the maximum steel sheet temperature is reached) is not particularly limited. The heating time is preferably 4 minutes or less in view of the easy control of the area ratio of oxide in the form of films described later. The heating time is preferably 10 seconds or more in order to ensure that the steel sheet is heated sufficiently by annealing.

To enhance conversion treatment properties, it is preferable that the area ratio, as will be described later, of oxide in the form of films present on the surface of the steel sheet after the annealing be controlled. The above ranges of the heating temperature and the heating time facilitate to control the area ratio of oxides on the steel sheet surface to an acceptable range.

After the thermal annealing, the steel sheet is cooled. The cooling rate and the cooling end temperature in this cooling are not particularly limited and any general conditions may be adopted. For example, the cooling rate may be generally in the range of 5 to 150°C/sec and the cooling end temperature may be generally in the range of 300 to 500°C.

The thermal annealing in the non-oxidizing atmosphere results in a phenomenon in which oxidizable elements of the composition of the steel sheet are concentrated as oxides on the surface of the steel sheet. Typical examples of such oxides include SiO₂, MnO and Si-Mn complex oxides.

Under the portion where these oxides present on the steel sheet surface, the reaction of a conversion treatment liquid to etch the steel sheet and to precipitate conversion crystals is inhibited. As a result, the steel sheet exhibits poor conversion treatment property, namely, the surface of the steel sheet locally has non-covered areas in which there are no conversion crystals. This decrease in conversion treatment properties causes a serious problem particularly when the oxides that have been concentrated on the surface are present in the form of films over relatively large areas of the steel sheet.

In the invention, the conversion treatment properties of the steel sheet are improved by pickling described below that is performed after the thermal annealing. Specifically, pickling which dissolves away the surface of the steel sheet by 0.5 g/m² or more is performed. The conversion treatment properties of the surface of the steel sheet are improved as a result of the surface of the steel sheet being dissolved away by 0.5 g/m² or more. According to the present invention in particular, satisfactory conversion layers may be formed even on steel sheets on which oxides have been concentrated on their surfaces in the form of films during annealing.

The above effects of the invention are probably obtained due to the following mechanism. When a steel sheet containing relatively large amounts of oxidizable elements such as silicon and manganese is annealed, oxides are concentrated on the surface with certain distributions. Of such oxides that have been concentrated on the surface, some are distributed as relatively small grains and others are distributed in the form of relatively large films. During electrogalvanization, no zinc is precipitated on the oxides distributed as films because the oxides concentrated on the surface are generally insulators and such regions do not allow the flow of electricity. In such regions of the steel sheet, no dissolution of iron takes place when the steel sheet is brought into contact with a conversion treatment liquid, and further, there is little zinc that has been deposited by electrogalvanization. As a result, it is impossible to form a conversion layer due to the failure of the conversion treatment liquid to produce the dissolution reaction. By performing pickling to reduce a specific amount of such an annealed sheet, the iron components on the surface of the steel sheet are allowed to undergo the dissolution reaction. Although the oxides concentrated on the surface remain without being dissolved, it is probable that the iron components present under the oxide which is distributed in the form of films are preferentially dissolved to form crevices. When this steel sheet is electrogalvanized, zinc is precipitated on portions of the surface of the steel sheet which are free from the oxide in the form of films while under portions covered with the oxide in the form of films, a zinc plating is precipitated in the crevices formed at the interfaces between the steel sheet and the oxides. When this galvanized steel sheet is subjected to conversion treatment, even the zinc plating deposited in the crevices immediately below the oxide in the form of films is dissolved by the treatment liquid. It is probable that the zinc in the crevices serves as a starting point of the precipitation of conversion crystals to allow a uniform and dense conversion layer to be formed.

Pickling after annealing is a conventional practice. For example, pickling after annealing is described also in the patent literatures discussed above. For example, the techniques described in Patent Literatures 2 to 4 are such that Si-Mn-based oxides rather than Si-based oxides are formed in larger amounts as the main oxides and the techniques utilize the fact that these Si-Mn-based oxides are soluble. Pickling after annealing may be performed for the purpose of assisting this dissolution. Since the purpose of pickling in Patent Literatures 2 to 4 is as described above and the techniques do not assume the dissolution of the surface of the steel sheet, the disclosed pickling is not associated with the dissolution of the surface of the steel sheet by 0.5 g/m² or more.

Patent Literatures 5 to 7 describe that strong pickling is performed mainly to remove Si oxide. In Patent Literatures 5 and 6, the removal of Si oxide requires that the weight loss of the steel sheet by pickling is 2 g/m² or more. Patent Literature 7 describes that Si-based oxides are removed by treatment with an acid and an alkali, and this treatment requires that the weight loss of the steel sheet by pickling is 2.0 g/m² or more. Further, in Patent Literatures 5 to 7, the Si-based oxides on the surface of the steel sheet are removed. That is, the structure of the steel sheet surface of interest is different from that of the present invention. Although Patent Literature 8 describes that pretreatment with an acid or an alkali is performed prior to electrogalvanization, this treatment is only aimed at cleaning and activation. Pickling for the purpose of cleaning or activation is not required to dissolve the surface of a steel sheet in a positive manner, and the pickling loss is usually about 0.1 g/m².

As discussed above, the technique of the present invention that improves conversion treatment properties by pickling is unprecedented in the art.

An important feature in the invention resides in that pickling is performed to a sufficient extent for a different purpose than in the conventional techniques. The pickling loss should be 0.5 g/m² or more. If the pickling loss is less than 0.5 g/m², crevices are formed only partially and the insufficiency of crevices makes it impossible to obtain the aforementioned effects. Pickling loss that is excessively large deteriorate conversion treatment properties. Further, such excessive pickling is not practical due to the increase in facility size and also due to the increase in treatment time. In view of these, the pickling loss is less than 2.0 g/m².

The type of an acidic liquid used for pickling is not particularly limited. It is preferable to use nitric acid, hydrofluoric acid, hydrochloric acid, sulfuric acid, or the like. Of these, the use of sulfuric acid is preferable from viewpoints such as operation safety. The acid concentration of the acidic liquid is not particularly limited and may be determined appropriately in the range of, for example, 5 mass% to 20 mass%.

The pickling method is not particularly limited and any general method may be adopted. In the invention, electrolytic pickling is a preferred pickling method from the viewpoint of the easiness in controlling the pickling loss. The pickling loss may be controlled by, for example, changing the energization time while the current density is constant or by changing the current density while the energization time is constant.

After the pickling treatment as described above, the high-strength cold rolled steel sheet is subjected to the following electroplating step, thereby achieving an enhancement in conversion treatment properties. In the invention, the surface of the pickled steel sheet is electroplated with zinc under such conditions that a coating mass of 100 to 5000 mg/m² is obtained. In the invention, the zinc plating deposited on the surface of the steel sheet serves to promote the formation of conversion crystals. It is therefore necessary that zinc be present on the steel sheet surface in an amount enough to allow a dense and uniform conversion layer to be formed. From this viewpoint, the lower limit of the Zn-coating mass is 100 mg/m². Any increase in the Zn-coating mass does not cause problems in conversion treatment properties. However, increasing the Zn-coating mass only for the purpose of improving the conversion treatment properties of cold rolled steel sheets themselves leads to an increase in cost. Thus, the upper limit of the coating mass is 5000 mg/m².

In the invention, the conditions for the electroplating step are not particularly limited as long as zinc may be deposited in the above coating mass on the steel sheet surface in the electroplating step.

Electrogalvanization is usually a method in which a steel sheet as a cathode, and an insoluble anode are placed in a zinc plating bath that is filled with an acidic plating liquid containing a prescribed amount of zinc ions, and electrolysis is performed while circulating the plating liquid to form a zinc plating on the surface of the steel sheet. As long as the zinc plating may be formed in a desired coating mass on the surface of the steel sheet, there is no limitation on the Zn ion concentration in the plating liquid, the type of the acidic component in the plating bath, the pH and the temperature of the plating bath, the flow rate of the plating liquid being circulated, and the current density during the electrolysis.

The coating mass may be controlled by, for example, changing the current density while the energization time is constant or by changing the energization time while the current density is constant.

As mentioned hereinabove, a feature of the invention resides in that zinc is precipitated in the crevices present between the Si oxide in the form of films and the steel sheet. It is also effective to control the ratio of the crevice portions to the total area. Here, the lower limit of the Zn-coating mass specified in the present invention is such an amount that zinc can cover the entirety of the surface of the steel sheet. In the invention, nonconductive Si-based oxides are present and crevices are formed at the interfaces between the oxides and the steel sheet. In this case, zinc can be precipitated in the crevices and consequently the zinc deposits collectively cover the entire surface of the steel sheet. If, however, the Si-based oxides occupy the major proportion of the surface of the steel sheet and even if crevices are present at the interfaces between the oxides and the steel sheet, it is difficult for zinc to be precipitated in such gaps in sufficient amounts. Thus, the ratio of the crevice portions is desirably controlled to 40% or less. The measurement of this ratio is difficult. However, assuming that the Zn-coating mass is in the range specified in the invention, the ratio of the crevice portions may be determined by analyzing the steel sheet surface with a technique such as an electron probe microanalyzer (EPMA) to determine the distribution of zinc and calculating the ratio of the Zn-free areas relative to the total surface. This area ratio may be controlled by controlling the area ratio of the Si-based oxide in the form of films present on the surface of the steel sheet after the annealing.

The portion where SiO₂ films are formed on the surface are insulating and no zinc layers are formed on such portions. However, when crevices are formed between the steel sheet and the SiO₂, zinc layers are formed in such crevices. Consequently, a very high Zn-coating ratio may be obtained. Preferably, the coating ratio is 100%. Further, in the invention, it is preferable that zinc be deposited by a certain amount or more on the surface of the steel sheet. Specifically, the area ratio of zinc deposited on the surface is preferably 60% or more and the area ratio of zinc deposited in the crevices (the ratio of the portion of the crevices described above) is preferably 40% or less.

The high-strength cold rolled steel sheets manufactured by the inventive manufacturing process have excellent conversion treatment properties. In addition to the aforementioned steps, the process preferably further includes a P-containing aqueous solution contact step in which the high-strength cold rolled steel sheet is brought into contact with a phosphorus-containing aqueous solution (a P-containing aqueous solution). The high-strength cold rolled steel sheets obtained by the manufacturing process of the invention comprehend high-strength cold rolled steel sheets that have undergone conversion treatment in the invention.

The conversion treatment of the high-strength cold rolled steel sheet obtained by the inventive process generally includes an alkali degreasing step, a surface conditioning step and a zinc phosphate treatment step in the order named. As a result of the introduction of the aforementioned P-containing aqueous solution contact step, a trace amount of phosphorus is attached to the surface of the zinc plating and consequently sufficient degreasing becomes feasible even in consideration of negative factors such as the degradation of an alkaline degreasing liquid. The mechanism of this effect is assumed to be as follows. In the use of a zinc sulfate bath that is a usual electrogalvanization bath, it is probable that the sulfate radicals are incorporated into the zinc plating layer and increase the affinity for oils to make degreasing difficult. In contrast, when the P-containing aqueous solution is brought into contact with the steel sheet, the sulfate radicals present on the surface are washed away and a trace amount of phosphorus is attached onto the surface to decrease the affinity for oils. This is probably the reason why degreasing properties are improved.

In the P-containing aqueous solution contact step, the P concentration of the aqueous solution that is to be contacted with the steel sheet is not particularly limited. The P concentration is preferably not less than 0.001 g/L. The treatment is particularly effective when the concentration is in the range of 0.001 to 10 g/L. If the P concentration is less than 0.001 g/L, the solution is not sufficient as it poorly washes away the sulfate radicals and the amount of phosphorus attached to the surface becomes insufficient. On the other hand, the upper limit is 10 g/L because the effects that are obtained are substantially unchanged after the concentration exceeds 10 g/L. The temperature of the P-containing aqueous solution is not particularly limited but is preferably not less than 30°C. The treatment is particularly effective when the temperature is in the range of 30 to 80°C. Sufficient effects are obtained by performing the P-containing aqueous solution contact step at a temperature of 30°C or above. The upper limit of the temperature is not limited from the viewpoint of effects. From the viewpoint of the temperature elevation in actual line operation, the practical upper limit is 80°C. Increasing the temperature of the P-containing aqueous solution to above 60°C ensures sufficient effects but is not economically efficient due to reasons such as the need of an extra heating facility. Thus, the upper limit of the temperature is more preferably 60°C.

The P-containing aqueous solution may be brought into contact with the steel sheet by any method without limitation. For example, a soaking method or a spraying method may be adopted. In the case of a spraying method, conditions such as the spray pressure, the nozzle diameter and the distance from the nozzle to the steel sheet are not particularly limited as long as the aqueous solution can be brought into contact with the steel sheet.

In the general conversion treatment, the alkali degreasing step cleans the steel sheets of oils such as antirust oils applied to the steel sheets and press washing oils frequently used in the press forming of automobile body exterior panels. It is sometimes difficult to remove such oils when galvanized steel sheets are directly soaked into an alkaline degreasing liquid. In particular, it is conceivable that an alkaline degreasing liquid will be contaminated with oils or degraded in the case where a large number of car bodies are alkali degreased continuously one after another on, for example, a painting line in an automobile manufacturer. In such a case, it may be possible that oils are not removed sufficiently and adversely affect the phosphatization treatment in the later stage. In the invention, the treatment with the P-containing aqueous solution can decrease the adverse effects on the conversion treatment even in the event of the degradation of an alkaline degreasing liquid.

For example, the alkaline degreasing liquid may be a liquid with a pH of 9 to 14 which includes at least one selected from silicate salts such as sodium orthosilicate, sodium metasilicate, sodium silicate No. 1 and sodium silicate No. 2, phosphate salts such as monosodium phosphate, disodium phosphate, trisodium phosphate, sodium pyrophosphate, sodium tripolyphosphate and sodium hexametaphosphate, alkalis such as sodium hydroxide, sodium carbonate, sodium hydrogencarbonate, sodium borate and sodium sulfite, and nonionic, anionic or cationic surfactants.

The surface conditioning step which is performed after the alkali degreasing step allow a layer (a layer composed of phosphate crystal) to be deposited more uniformly in the subsequent conversion treatment. Examples of the surface conditioning treatments include soaking in a treatment liquid such as a titanium colloid-containing aqueous liquid or a zinc phosphate colloid-containing aqueous liquid.

Thereafter, the zinc phosphate treatment step is performed. The zinc phosphate treatment step is a step forming a conversion layer.

The zinc phosphate treatment may be performed by any method without limitation. For example, the steel sheet may be soaked in a conversion treatment liquid containing zinc phosphate or may be coated with such a conversion treatment liquid with a device such as a spray or a coater.

The phosphate crystals formed by the conversion treatment include phosphophyllite (Zn₂Fe(PO₄)₂·4H₂O). In the invention, the phosphate crystals precipitated also include a large amount of hopeite (Zn₃(PO₄)₂·4H₂O). It is conventionally known that steel sheets exhibit higher post-painting corrosion resistance with increasing P ratio (the value of P/(P + H) obtained by the X-ray diffractometry of phosphated steel sheets wherein P is the intensity of phosphophyllite and H is the intensity of hopeite). In recent years, however, the P ratio has no significance on the post-painting performance due to the rapid improvements of conversion treatment agents and electrodeposition paints.

The advantageous effects of the present invention have been described hereinabove mainly in terms of the improvements in conversion treatment properties of high-Si high-strength cold rolled steel sheets. In the invention, improvements in post-painting corrosion resistance may be also obtained by virtue of the presence of zinc on the steel sheet surface. That is, the technique of the present invention ensures both conversion treatment properties and post-painting corrosion resistance of cold rolled steel sheets.

The types of paints used in the painting are not particularly limited and may be selected appropriately in accordance with purposes such as use application. The paints may be applied by any methods without limitation. Examples of the coating methods include electrodeposition coating, roll coating, curtain flow coating and spray coating. Techniques such as hot air drying, infrared heating and induction heating may be used to dry the paints.

The high-strength cold rolled steel sheets produced by the manufacturing process of the invention comprehend painted steel sheets obtained as described above.

### EXAMPLES

Steels A to D having the chemical compositions described in Table 1 were produced by a usual steelmaking process and were continuously cast and rolled into slabs. Next, the slabs were reheated to 1250°C and were hot rolled at a finishing temperature of 850°C and a coiling temperature of 600°C. Thus, hot rolled sheets with a sheet thickness of 3.0 mm were obtained. The hot rolled sheets were pickled and were thereafter cold rolled to a sheet thickness of 1.5 mm, thereby test samples being prepared. With use of a laboratory reductive heating simulator, the test samples were heat treated in a nitrogen atmosphere containing 10 vol% hydrogen at 800 to 850°C. In this manner, annealed sheets were produced.

The annealed steel sheets were subjected to electrolytic pickling in a 100 g/L aqueous sulfuric acid solution using a stainless steel plate as the cathode. In this process, the current density was constant at 10 A/dm², and the pickling losses were varied by controlling the energization time.

The pickled steel sheets were electroplated in an aqueous solution which contained 1 mol/L of zinc sulfate heptahydrate and which had been adjusted to pH 2.0 with sulfuric acid. As the anode, an iridium oxide plate was used. In this manner, zinc plating was deposited on the surface. The amounts of zinc deposited by zinc plating were varied by changing the current density and the energization time. The galvanized steel sheets were subjected to a P-containing aqueous solution contact step.

The cold rolled steel sheets produced above were analyzed with an X-ray microanalyzer (EPMA) at an accelerating voltage of 5 kV. Based on the zinc mapping analysis results, the Zn-free area ratio (or the Zn area ratio) was calculated by image processing. Further, the following conversion treatment was carried out to evaluate conversion treatment properties.

First, a bath was prepared which contained a commercial alkaline degreasing liquid (Fine Cleaner FC-E2001 manufactured by Nihon Parkerizing Co., Ltd.) with a prescribed concentration. In order to simulate degradation, another bath was prepared in which the degreasing liquid was diluted to half the prescribed concentration. The steel sheets were soaked in each of these baths for 2 minutes. The steel sheets were then washed with water, and the water wetting ratio was evaluated. The water wetting ratio was rated as "○" when the value was 80% or above, "Δ" less than 80%, or "×" 50% or less. The results were used as an indicator of degreasing properties. In the invention, degreasing properties are evaluated as good when the water wetting ratio is 80% or more.

Next, the cold rolled steel sheets that had been degreased with the degreasing liquid with the prescribed concentration were soaked in a surface conditioner (PL-ZTH manufactured by Nihon Parkerizing Co., Ltd.) and were thereafter phosphated by being soaked in a phosphatization liquid (PALBOND PB-L3080 manufactured by Nihon Parkerizing Co., Ltd.) at a bath temperature of 43°C for a treatment time of 120 seconds. Ten fields of view of the surface of the phosphated steel sheets were observed by SEM at x300 magnification. The steel sheets were evaluated based on the following five grades (conversion grades) regarding the presence or absence and the size of areas where phosphate crystals were not formed (non-covered areas), as well as the non-uniformity of state of crystals. Here, small non-covered areas were of circular shape having a diameter of about 10 µm.
5 Points: There were no non-covered areas, and the crystals were uniform.
4 Points: The crystals were slightly nonuniform, but there were no non-covered areas.
3 Points: There were small non-covered areas.
2 Points: There were relatively large non-covered areas.
1 Point: There were a large number of relatively large non-covered areas.

Further, the steel sheets were coated with a commercial ED paint (GT-10 manufactured by Kansai Paint Co., Ltd.) with a film thickness of 20 µm, and the coated surface was cross-cut with NT Cutter. The steel sheets were then soaked in hot salt water (5% NaCl, 50°C) for 10 days. After the soaking, a polyester tape was applied to cover the cross-cut areas of the samples and was thereafter peeled therefrom. The maximum width of peeling on any one side of the cut lines (the width of peeling on one side after soaking in hot salt water) was measured. The test results are described in Tables 2 to 4.

**[Table 1]**

| Steel | Chemical composition (mass%) | | | | | | |
|---|---|---|---|---|---|---|---|
| | C | Si | Mn | P | S | Al | N |
| A | 0.10 | 0.50 | 1.6 | 0.030 | 0.0020 | 0.040 | 0.0036 |
| B | 0.10 | 1.00 | 2.1 | 0.020 | 0.0010 | 0.007 | 0.0040 |
| C | 0.10 | 1.50 | 2.0 | 0.030 | 0.0020 | 0.040 | 0.0036 |
| D | 0.10 | 2.00 | 2.6 | 0.020 | 0.0010 | 0.007 | 0.0040 |

### [Table 2]

**[Table 2]**

| No. | Steel | Annealing atmosphere | | Heating in annealing | | Pickling loss (g/m²) | Zn-coating mass (mg/m²) | Contact with P-containing aqueous solution | | Zn area ratio (%) | Alkali degreasing | | | | Conversion grade | Soaking in hot salt water | |
|---|---|---|---|---|---|---|---|---|---|---|---|---|---|---|---|---|---|
| | | H₂ conc. | Dew point | Temp. | Time | | | P conc. | Temp. | | Conc. | Water wetting | Conc. | Water wetting | | Width of peeling on one side | |
| | | (vol%) | (°C) | (°C) | (min) | | | (g/L) | (°C) | | | | | | | (mm) | |
| 1 | A | 10.00 | -35 | 800 | 3 | - | - | - | - | - | Prescribed | ○ | 2-fold dilution | ○ | 2 | 6.2 | Comp. Ex. 1 |
| 2 | B | ↓ | ↓ | 810 | ↓ | - | - | - | - | - | ↓ | ○ | ↓ | ○ | 2 | 7.6 | Comp. Ex. 2 |
| 3 | C | ↓ | ↓ | 830 | ↓ | - | - | - | - | - | ↓ | ○ | ↓ | ○ | 1 | 8.1 | Comp. Ex. 3 |
| 4 | D | ↓ | ↓ | 850 | ↓ | - | - | - | - | - | ↓ | ○ | ↓ | ○ | 1 | 8.5 | Comp. Ex. 4 |
| 5 | A | ↓ | ↓ | 800 | ↓ | - | 500 | 0.5000 | 50 | 73 | ↓ | ○ | ↓ | ○ | 2 | 5.2 | Comp. Ex. 5 |
| 6 | B | ↓ | ↓ | 810 | ↓ | - | ↓ | ↓ | ↓ | 75 | ↓ | ○ | ↓ | ○ | 2 | 5.5 | Comp. Ex. 6 |
| 7 | C | ↓ | ↓ | 830 | ↓ | - | ↓ | ↓ | ↓ | 75 | ↓ | ○ | ↓ | ○ | 1 | 6.0 | Comp. Ex. 7 |
| 8 | D | ↓ | ↓ | 850 | ↓ | - | ↓ | ↓ | ↓ | 74 | ↓ | ○ | ↓ | ○ | 1 | 6.3 | Comp. Ex. 8 |
| 9 | A | ↓ | ↓ | 800 | ↓ | 0.2 | ↓ | ↓ | ↓ | 75 | ↓ | ○ | ↓ | ○ | 3 | 3.5 | Comp. Ex. 9 |
| 10 | B | ↓ | ↓ | 810 | ↓ | ↓ | ↓ | ↓ | ↓ | 73 | ↓ | ○ | ↓ | ○ | 3 | 3.8 | Comp. Ex. 10 |
| 11 | C | ↓ | ↓ | 830 | ↓ | ↓ | ↓ | ↓ | ↓ | 73 | ↓ | ○ | ↓ | ○ | 3 | 4.0 | Comp. Ex. 11 |
| 12 | D | ↓ | ↓ | 850 | ↓ | ↓ | ↓ | ↓ | ↓ | 73 | ↓ | ○ | ↓ | ○ | 3 | 4.0 | Comp. Ex. 12 |
| 13 | A | ↓ | ↓ | 800 | ↓ | 0.5 | ↓ | ↓ | ↓ | 74 | ↓ | ○ | ↓ | ○ | 5 | 2.0 | Inv. Ex. 1 |
| 14 | B | ↓ | ↓ | 810 | ↓ | ↓ | ↓ | ↓ | ↓ | 76 | ↓ | ○ | ↓ | ○ | 5 | 2.0 | Inv. Ex. 2 |
| 15 | C | ↓ | ↓ | 830 | ↓ | ↓ | ↓ | ↓ | ↓ | 75 | ↓ | ○ | ↓ | ○ | 5 | 2.0 | Inv. Ex. 3 |
| 16 | D | ↓ | ↓ | 850 | ↓ | ↓ | ↓ | ↓ | ↓ | 75 | ↓ | ○ | ↓ | ○ | 5 | 2.0 | Inv. Ex. 4 |
| 17 | A | ↓ | ↓ | 800 | ↓ | 1.0 | 50 | ↓ | ↓ | 73 | ↓ | ○ | ↓ | ○ | 3 | 5.5 | Comp. Ex. 13 |
| 18 | B | ↓ | ↓ | 810 | ↓ | ↓ | ↓ | ↓ | ↓ | 73 | ↓ | ○ | ↓ | ○ | 2 | 6.3 | Comp. Ex. 14 |
| 19 | C | ↓ | ↓ | 830 | ↓ | ↓ | ↓ | ↓ | ↓ | 74 | ↓ | ○ | ↓ | ○ | 2 | 6.5 | Comp. Ex. 15 |
| 20 | D | ↓ | ↓ | 850 | ↓ | ↓ | ↓ | ↓ | ↓ | 73 | ↓ | ○ | ↓ | ○ | 1 | 7.0 | Comp. Ex. 16 |
| 21 | A | ↓ | ↓ | 800 | ↓ | ↓ | 150 | ↓ | ↓ | 75 | ↓ | ○ | ↓ | ○ | 5 | 1.6 | Inv. Ex. 5 |
| 22 | B | ↓ | ↓ | 810 | ↓ | ↓ | 4 | ↓ | | 75 | ↓ | ○ | ↓ | ○ | 5 | 1.7 | Inv. Ex. 6 |
| 23 | C | ↓ | ↓ | 830 | ↓ | ↓ | ↓ | ↓ | ↓ | 74 | ↓ | ○ | ↓ | ○ | 5 | 1.3 | Inv. Ex. 7 |
| 24 | D | ↓ | ↓ | 850 | ↓ | ↓ | ↓ | ↓ | ↓ | 73 | ↓ | ○ | ↓ | ○ | 5 | 1.5 | Inv. Ex. 8 |

### [Table 3]

**[Table 3]**

| No. | Steel | Annealing atmosphere | | Heating in annealing | | Pickling loss (g/m²) | Zn-coating mass (mg/m²) | Contact with P-containing aqueous solution | | Zn area ratio (%) | Alkali degreasing | | | | Conversion grade | Soaking in hot salt water | |
|---|---|---|---|---|---|---|---|---|---|---|---|---|---|---|---|---|---|
| | | H₂ conc. | Dew point | Temp. | Time | | | P conc. | T | | Conc. | Water wetting | Conc. | Water wetting | | Width of peeling on one side | |
| | | (vol%) | (°C) | (°C) | (min) | | | (g/L) | emp. (°C) | | | | | | | (mm) | |
| 25 | A | 10.00 | -35 | 800 | 3 | 1.0 | 1000 | 0.5000 | 50 | 78 | Prescribed | ○ | 2-fold dilution | ○ | 5 | 1.4 | Inv. Ex. 9 |
| 26 | B | ↓ | ↓ | 810 | ↓ | 1 | ↓ | ↓ | ↓ | 78 | ↓ | ○ | ↓ | ○ | 5 | 1.2 | Inv. Ex. 10 |
| 27 | C | ↓ | ↓ | 830 | ↓ | ↓ | ↓ | ↓ | ↓ | 77 | ↓ | ○ | ↓ | ○ | 5 | 1.3 | Inv. Ex. 11 |
| 28 | D | ↓ | ↓ | 850 | ↓ | ↓ | ↓ | ↓ | ↓ | 77 | ↓ | ○ | ↓ | ○ | 5 | 1.1 | Inv. Ex. 12 |
| 29 | A | ↓ | ↓ | 800 | ↓ | ↓ | 3000 | ↓ | ↓ | 78 | ↓ | ○ | ↓ | ○ | 5 | 1.6 | Inv. Ex. 13 |
| 30 | B | ↓ | ↓ | 810 | ↓ | ↓ | ↓ | ↓ | ↓ | 79 | ↓ | ○ | ↓ | ○ | 5 | 1.6 | Inv. Ex. 14 |
| 31 | C | ↓ | ↓ | 830 | ↓ | ↓ | ↓ | ↓ | ↓ | 78 | ↓ | ○ | ↓ | ○ | 5 | 1.3 | Inv. Ex. 15 |
| 32 | D | ↓ | ↓ | 850 | ↓ | ↓ | ↓ | ↓ | ↓ | 78 | ↓ | ○ | ↓ | ○ | 5 | 1.4 | Inv. Ex. 16 |
| 33 | A | ↓ | ↓ | 800 | ↓ | ↓ | 5000 | ↓ | ↓ | 79 | ↓ | ○ | ↓ | ○ | 5 | 1.4 | Inv. Ex. 17 |
| 34 | B | ↓ | ↓ | 810 | ↓ | ↓ | ↓ | ↓ | ↓ | 80 | ↓ | ○ | ↓ | ○ | 5 | 1.2 | Inv. Ex. 18 |
| 35 | C | ↓ | ↓ | 830 | ↓ | ↓ | ↓ | ↓ | ↓ | 79 | ↓ | ○ | ↓ | ○ | 5 | 1.3 | Inv. Ex. 19 |
| 36 | D | ↓ | ↓ | 850 | ↓ | ↓ | ↓ | ↓ | ↓ | 79 | ↓ | ○ | ↓ | ○ | 5 | 1.7 | Inv. Ex. 20 |
| 37 | A | ↓ | ↓ | 800 | 7 | ↓ | 500 | ↓ | ↓ | 51 | ↓ | ○ | ↓ | ○ | 3 | 3.8 | Comp. Ex. 21 |
| 38 | B | ↓ | ↓ | 810 | ↓ | ↓ | ↓ | ↓ | ↓ | 52 | ↓ | ○ | ↓ | ○ | 3 | 3.5 | Comp. Ex. 22 |
| 39 | C | ↓ | ↓ | 830 | ↓ | ↓ | ↓ | ↓ | ↓ | 50 | ↓ | ○ | ↓ | ○ | 3 | 3.8 | Comp. Ex. 23 |
| 40 | D | ↓ | ↓ | 850 | ↓ | ↓ | ↓ | ↓ | ↓ | 50 | ↓ | ○ | ↓ | ○ | 3 | 3.7 | Comp. Ex. 24 |
| 41 | A | ↓ | ↓ | 800 | 3 | 1.5 | ↓ | ↓ | ↓ | 80 | ↓ | ○ | ↓ | ○ | 5 | 1.3 | Inv. Ex. 25 |
| 42 | B | ↓ | ↓ | 810 | ↓ | ↓ | ↓ | ↓ | ↓ | 80 | ↓ | ○ | ↓ | ○ | 5 | 1.6 | Inv. Ex. 26 |
| 43 | C | ↓ | ↓ | 830 | ↓ | ↓ | ↓ | ↓ | ↓ | 81 | ↓ | ○ | ↓ | ○ | 5 | 1.6 | Inv. Ex. 27 |
| 44 | D | ↓ | ↓ | 850 | ↓ | ↓ | ↓ | ↓ | ↓ | 80 | ↓ | ○ | ↓ | ○ | 5 | 1.2 | Inv. Ex. 28 |

### [Table 4]

**[Table 4]**

| No. | Steel | Annealing atmosphere | | Heating in annealing | | Pickling loss (g/m²) | Zn-coating mass (mg/m²) | Contact with P-containing aqueous solution | | Zn area ratio (%) | Alkali degreasing | | | | Conversion grade | Soaking in hot salt water | |
|---|---|---|---|---|---|---|---|---|---|---|---|---|---|---|---|---|---|
| | | H₂ conc. | Dew point | Temp. | T | | | P conc. | T | | Conc. | Water wetting | Conc. | Water wetting | | Width of peeling on one side (mm) | |
| | | (vol%) | (°C) | (°C) | ime (min) | | | (g/L) | emp. (°C) | | | | | | | | |
| 45 | A | 1.00 | -35°C | 800 | 3 | 1.0 | 500 | 0.5000 | 50 | 79 | Prescribed | ○ | 2-fold dilution | ○ | 5 | 1.1 | Inv. Ex. 29 |
| 46 | B | ↓ | ↓ | 810 | | ↓ | ↓ | ↓ | ↓ | 78 | ↓ | ○ | ↓ | ○ | 5 | 1.2 | Inv. Ex. 30 |
| 47 | C | ↓ | ↓ | 830 | ↓ | ↓ | ↓ | ↓ | ↓ | 78 | ↓ | ○ | ↓ | ○ | 5 | 1.2 | Inv. Ex. 31 |
| 48 | D | ↓ | ↓ | 850 | | ↓ | ↓ | ↓ | ↓ | 79 | ↓ | ○ | ↓ | ○ | 5 | 1.2 | Inv. Ex. 32 |
| 49 | A | 0.10 | ↓ | 800 | | ↓ | ↓ | ↓ | ↓ | 80 | ↓ | ○ | ↓ | ○ | 5 | 1.2 | Inv. Ex. 33 |
| 50 | B | ↓ | ↓ | 810 | ↓ | ↓ | ↓ | ↓ | ↓ | 80 | ↓ | ○ | ↓ | ○ | 5 | 1.0 | Inv. Ex. 34 |
| 51 | C | ↓ | ↓ | 830 | | ↓ | ↓ | ↓ | ↓ | 79 | ↓ | ○ | ↓ | ○ | 5 | 1.1 | Inv. Ex. 35 |
| 52 | D | ↓ | ↓ | 850 | ↓ | ↓ | ↓ | ↓ | ↓ | 80 | ↓ | ○ | ↓ | ○ | 5 | 0.8 | Inv. Ex. 36 |
| 53 | C | 10.00 | ↓ | 830 | | ↓ | ↓ | - | - | 75 | ↓ | ○ | ↓ | × | 5 | 1.3 | Inv. Ex. 37 |
| 54 | C | ↓ | ↓ | ↓ | ↓ | ↓ | ↓ | 0.0005 | 50°C | 75 | ↓ | ○ | ↓ | Δ | 5 | 1.6 | Inv. Ex. 38 |
| 55 | C | ↓ | ↓ | ↓ | ↓ | ↓ | ↓ | 0.0010 | 50°C | 75 | ↓ | ○ | ↓ | ○ | 5 | 1.6 | Inv. Ex. 39 |
| 56 | C | ↓ | ↓ | ↓ | ↓ | ↓ | ↓ | 0.1000 | 50°C | 75 | ↓ | ○ | ↓ | ○ | 5 | 1.2 | Inv. Ex. 40 |
| 57 | C | ↓ | ↓ | ↓ | ↓ | ↓ | ↓ | 2.0000 | 50°C | 75 | ↓ | ○ | ↓ | ○ | 5 | 1.1 | Inv. Ex. 41 |
| 58 | C | ↓ | ↓ | ↓ | ↓ | ↓ | ↓ | 10.000 | 50°C | 75 | ↓ | ○ | ↓ | ○ | 5 | 1.0 | Inv. Ex. 42 |
| 59 | C | ↓ | ↓ | ↓ | ↓ | ↓ | ↓ | 0.5000 | 20°C | 75 | ↓ | ○ | ↓ | Δ | 5 | 1.2 | Inv. Ex. 43 |
| 60 | C | ↓ | ↓ | ↓ | ↓ | ↓ | ↓ | 0.5000 | 30°C | 75 | ↓ | ○ | ↓ | ○ | 5 | 1.3 | Inv. Ex. 44 |
| 61 | C | ↓ | ↓ | ↓ | ↓ | ↓ | ↓ | 0.5000 | 60°C | 75 | ↓ | ○ | ↓ | ○ | 5 | 1.5 | Inv. Ex. 45 |
| 62 | C | ↓ | ↓ | ↓ | ↓ | ↓ | ↓ | 0.5000 | 70°C | 75 | ↓ | ○ | ↓ | ○ | 5 | 1.1 | Inv. Ex. 46 |
| 63 | C | ↓ | ↓ | ↓ | ↓ | ↓ | ↓ | 2.0000 | 70°C | 75 | ↓ | ○ | ↓ | ○ | 5 | 1.2 | Inv. Ex. 47 |
| 64 | C | ↓ | ↓ | ↓ | ↓ | ↓ | ↓ | 10.000 | 70°C | 75 | ↓ | ○ | ↓ | ○ | 5 | 1.2 | Inv. Ex. 48 |

From Table 1, all the steel sheets contained a large amount of silicon. From Table 2, those steel sheets which had been phosphated after the annealing without the annealing pickling step and the electroplating step (Comparative Examples 1 to 4) were evaluated to have a large proportion of non-covered areas in the conversion layer. Further, the peeling width after soaking of the painted steel sheets in hot salt water resulted in large values.

Substantially no improvements were obtained in the judgement of the state of conversion layers or in the width of peeling after soaking in hot salt water in the example in which zinc was deposited to the annealed steel sheet in a coating mass specified in the invention but the steel sheet had not been pickled in accordance with the invention (Comparative Examples 5 to 8) or in the example in which the steel sheet was pickled but the pickling loss was outside the range specified in the invention (Comparative Examples 9 to 12).

In contrast, it was shown that a conversion layer was formed uniformly without the occurrence of non-covered areas and the width of peeling after soaking in hot salt water was stably small in the example in which the annealed steel sheet was pickled and was galvanized with a coating mass specified in the invention (Inventive Examples 1 to 4).

On the other hand, little improvement was obtained in the state of conversion layers and the width of peeling after soaking in hot salt water was large in the example in which the annealed steel sheet was pickled to a sufficient extent but the zinc-coating mass was below the range specified in the invention (Comparative Examples 13 to 16).

It was shown that all the characteristics were satisfied to a sufficient extent in the example in which the pickling loss and the zinc-coating mass were within the inventive ranges (Inventive Examples 5 to 20).

In Comparative Examples 21 to 24, the surface conditions were varied by extending the heating time in the annealing over the usual length of time. As compared to other Inventive Examples, the conversion grades were relatively low and the widths of peeling after soaking in hot salt water were large in spite of the fact that the pickling loss and the zinc-coating mass were within the ranges specified in the invention. This shows that not only the coating mass but the ratio of the areas in which zinc is distributed on the surface should be taken into consideration.

Improvements in the quality of conversion layers and in the widths of peeling after soaking in hot salt water were obtained also when the pickling loss was varied (Inventive Examples 25 to 28) or when the hydrogen concentration during the annealing was varied (Inventive Examples 29 to 36).

The electroplated steel sheet which had not been contacted with a P-containing aqueous solution (Inventive Example 37) or which had been contacted with a low concentration of phosphorus (Inventive Example 38) exhibited sufficient degreasing properties when the degreasing liquid had the prescribed concentration. However, these steel sheets repelled water after the degreasing treatment when the degreasing liquid had the diluted concentration which simulated degradation in an actual painting line. Similarly, the steel sheet failed to exhibit sufficient degreasing property in the treatment with the diluted degreasing liquid when the steel sheet had been contacted with a high concentration of phosphorus but the temperature of the treatment liquid was low (Inventive Example 43). In contrast, the steel sheets achieved sufficient degreasing properties even with respect to the diluted degreasing liquid when the P concentration and the temperature of the treatment liquid were within the inventive ranges (Inventive Examples 39 to 42, and 44 to 48).

### Industrial Applicability

According to the present invention, even high-strength cold rolled steel sheets containing large amounts of alloying elements achieve good conversion treatment properties before painting and exhibit good corrosion resistance after painting, and thus may be used in automobile body applications.

## Claims

1. A process for manufacturing high-strength cold rolled steel sheets, the high-strength cold rolled steel sheets containing 0.5 to 2.0 mass% silicon, the process comprising:
a pickling step of thermally annealing a steel sheet in a non-oxidizing atmosphere and thereafter pickling the steel sheet to dissolve away 0.5 g/m² to less than 2.0 g/m² of the steel sheet, and
an electroplating step of electroplating the surface of the pickled steel sheet with zinc under such conditions that a coating mass of 100 to 5000 mg/m² is obtained,
wherein the heating time during the thermal annealing is 4 minutes or less.

2. The process for manufacturing high-strength cold rolled steel sheets according to claim 1, wherein the non-oxidizing atmosphere is obtained by introduction of a mixture gas containing nitrogen and hydrogen,
the hydrogen content in the non-oxidizing atmosphere is not more than 10 vol%, and
the temperature of heating during the thermal annealing is not more than 900°C.

3. The process for manufacturing high-strength cold rolled steel sheets according to any one of claims 1 and 2, wherein the process further comprises an aqueous solution contact step of bringing the steel sheet after the electroplating step into contact with a P-containing aqueous solution having a concentration of not less than 0.001 g/L at a temperature of the P-containing aqueous solution of not less than 30°C.

## Patentansprüche

1. Verfahren zur Herstellung hochfester, kaltgewalzter Stahlbleche, wobei die hochfesten, kaltgewalzten Stahlbleche 0,5 bis 2,0 Masse-% Silicium enthalten, wobei das Verfahren umfasst:
einen Beizschritt des thermischen Glühens eines Stahlblechs in einer nicht-oxidierenden Atmosphäre und danach Beizen des Stahlblechs, um 0,5 g/m² bis weniger als 2,0 g/m² des Stahlblechs wegzulösen, und
einen Elektroplattierungsschritt des Elektroplattierens der Oberfläche des gebeizten Stahlblechs mit Zink unter solchen Bedingungen, dass eine Überzugsmasse von 100 bis 5000 mg/m² erhalten wird,
wobei die Erhitzungszeit während des thermischen Glühens 4 Minuten oder weniger beträgt.

2. Verfahren zur Herstellung hochfester, kaltgewalzter Stahlbleche nach Anspruch 1, wobei die nicht-oxidierende Atmosphäre durch Einbringen eines Mischgases erhalten wird, das Stickstoff und Wasserstoff enthält,
der Wasserstoffgehalt in der nicht-oxidierenden Atmosphäre nicht mehr als 10 Vol.-% beträgt, und
die Temperatur des Erhitzens während des thermischen Glühens nicht mehr als 900°C beträgt.

3. Verfahren zur Herstellung hochfester, kaltgewalzter Stahlbleche nach einem der Ansprüche 1 und 2, wobei das Verfahren ferner einen Kontaktierungsschritt einer wässrigen Lösung umfasst, bei dem das Stahlblech nach dem Elektroplattierungsschritt mit einer P-haltigen wässrigen Lösung mit einer Konzentration von nicht weniger als 0,001 g/l bei einer Temperatur der P-haltigen wässrigen Lösung von nicht mehr als 30°C in Kontakt gebracht wird.

## Revendications

1. Un procédé de fabrication de tôles d'acier laminées à froid à haute résistance, les tôles d'acier laminées à froid à haute résistance contenant une masse de silicium située entre 0,5 et 2,0 %, le procédé comprenant :
une étape de décapage de recuit thermique d'une tôle d'acier dans une atmosphère non oxydante suivi du décapage de la tôle d'acier afin de dissoudre 0,5 g/m² jusqu'à moins de 2,0 g/m² de la tôle d'acier ; et
une étape de galvanoplastie consistant à plaquer par galvanoplastie la surface de la tôle d'acier décapée avec du zinc dans des conditions telles qu'une masse de revêtement de 100 à 5 000 mg/m² soit obtenue,
dans laquelle le temps de chauffage pendant le recuit thermique est inférieur ou égal à 4 minutes.

2. Le procédé de fabrication de tôles d'acier laminées à froid à haute résistance selon la revendication 1, dans lequel l'atmosphère non oxydante est obtenue par introduction d'un mélange gazeux contenant de l'azote et de l'hydrogène,
la teneur en hydrogène de l'atmosphère non oxydante ne dépassant pas 10 % du volume, et
la température de chauffage pendant le recuit thermique ne dépassant pas 900 °C.

3. Le procédé de fabrication de tôles d'acier laminées à froid à haute résistance selon l'une quelconque des revendications 1 et 2, dans lequel le procédé comprend en outre une étape de contact en solution aqueuse consistant à mettre en contact la tôle d'acier après l'étape de galvanoplastie avec une solution aqueuse avec une teneur P ayant une concentration non inférieure à 0,001 g/L à une température de la solution aqueuse avec une teneur P non inférieure à 30 °C.
